# FASCICULE DE BREVET EUROPEEN

(11) **EP 1 597 509 B1**
(45) Date de publication et mention de la délivrance du brevet: **28.11.2007**
(21) Numéro de dépôt: 04713930.8
(22) Date de dépôt: 24.02.2004
(51) Int. Cl.: F16L 55/168, F16L 55/17

(54) **MANCHON A INSERT POUR LA REPARATION D'UNE CANALISATION DE TRANSPORT DE FLUIDE A HAUTE PRESSION**
SANIERUNGSSCHALE FÜR HOCHDRUCKLEITUNGEN
SLEEVE WITH INSERT FOR REPAIRING HIGH-PRESSURE FLUID PIPES

(30) Priorité: 24.02.2003 FR 0302241
(43) Date de publication de la demande: 23.11.2005
(73) Titulaire: 3X Engineering, 98000 Monaco (MC); Submin, Limited, Dublin 2 (IE)
(72) Inventeur: BOULET D'AURIA, Stanislas, F-98000 MC Monaco (FR); SLIMANI, Hacen, F-06210 Nice (FR)
(86) Numéro de dépôt international: PCT/FR2004/000415
(87) Numéro de publication internationale: WO 2004/076910

(56) Documents cités:
- DE-A- 3 208 452
- FR-A- 2 147 433
- US-A- 647 996
- US-A- 3 994 431
- US-A1- 2001 015 234

## Description

### Domaine technique

La présente invention concerne les systèmes utilisés pour la réparation des canalisations destinées au transport de fluides à haute pression telles que les pipelines pour le transport du pétrole et a trait en particulier à un manchon à insert pour la réparation d'une canalisation de transport de fluide à haute pression.

### Etat de la technique

De façon générale, on utilise un manchon servant de moule d'injection pour colmater une fuite dans une canalisation de transport de fluide. La portion à réparer est entourée du manchon qui forme une cavité étanche dans laquelle on injecte une matière liquide polymérisable qui, en se polymérisant, forme un revêtement de colmatage de fuite ou d'isolation thermique, chimique et anti-chocs.

Des manchons utilisables dans cette technique sont décrits par exemple dans les brevets FR 2.158.895, EP 278.050, US 4.610.740 ou GB 2.119.884. Ils sont formés de deux demi-coquilles cylindriques réunies pour ne former qu'une seule coquille recouvrant la portion à protéger ou à réparer. On verse ensuite la matière liquide polymérisable (constituée généralement des composants d'une résine époxyde ou d'une résine de polyuréthane) par un trou d'injection prévu dans la paroi de la coquille, dans la cavité ainsi formée.

Ces manchons formés de deux demi-coquilles sont donc adaptés pour une canalisation d'un diamètre déterminé. Il faut donc disposer de manchons de différents diamètres susceptibles de s'adapter aux différents diamètres de canalisations. Ceci entraîne donc la nécessité d'avoir des moules différents pour pouvoir fabriquer les demi-coquilles ayant des diamètres adaptés à toutes les canalisations, et entraîne donc un coût prohibitif.

On a donc songé à utiliser un manchon modulaire tel que décrit dans le brevet EP 0.856.117 constitué de modules identiques et donc ne nécessitant qu'un seul moule de fabrication des modules. Dans cette technique, en faisant varier le nombre de modules constituant le manchon, on peut adapter le manchon à des canalisations de différents diamètres. En outre, chaque module comporte une partie mâle et une partie femelle de manière à ce que la partie mâle d'un module puisse s'emboîter partiellement ou totalement dans la partie femelle du module contigu. Ceci permet à un manchon constitué d'un nombre déterminé de modules de pouvoir s'adapter à des canalisations dont les diamètres sont compris entre une valeur minimale et une valeur maximale. Malheureusement, du fait de sa structure modulaire, ce type de manchon ne supporte pas des pressions très élevées de l'ordre de quelques dizaines de bars auxquelles sont soumises certaines canalisations destinées à transporter des fluides sur de longues distances comme c'est le cas des pipelines de transport de pétrole.

Dans le but d'effectuer des réparations à des canalisations supportant des pressions élevées, le brevet US 5.632.307 décrit un dispositif qui consiste en une bande élastique sous forme d'une bobine présentant une pluralité d'enroulements du type ressort en spirale (clock spring) qui est placé autour de la canalisation à l'endroit de la zone défectueuse. Outre le fait que la zone corrodée doit être mastiquée, que la bande rigide est difficile à mettre en place à cause de l'effet ressort, et enfin que sa pose nécessite un terrassement important sous la canalisation pour pouvoir enrouler les différentes couches de la bobine, un tel dispositif ne peut pas être utilisé si la canalisation est ovale, si elle présente un coude à courbure prononcée à l'endroit de la zone défectueuse ou si, en plus, il est nécessaire de meuler les cordons de soudure s'il en existe à cet endroit de manière à ce que le dispositif puisse agir efficacement.

Le document US 647.996 décrit une méthode pour réparer une fuite dans une canalisation et résout donc un problème différent. Elle consiste à appliquer une plaque contre la canalisation à l'endroit où est située la fissure qui est la cause de la fuite, et de maintenir la plaque en position au moyen d'un câble en hélice autour de la canalisation. Puis, un manchon autour du câble et du métal fondu est injecté dans le manchon.

### Exposé de l'invention

C'est pourquoi le but de l'invention est de fournir un manchon destiné à la réparation d'une canalisation de transport de fluide soumise à des pressions élevées.

Un autre but de l'invention est de fournir un manchon destiné à la réparation d'une canalisation présentant une zone défectueuse quelle que soit la géométrie de la canalisation ou son rayon de courbure à l'endroit de la zone défectueuse.

L'objet de l'invention est donc un manchon selon la revendication 1.

### Description brève des dessins

Les buts, objets et caractéristiques de l'invention apparaîtront plus clairement à la lecture de la description qui suit faite en référence aux dessins dans lesquels :
La figure 1 représente une portion de canalisation comportant une zone défectueuse sur laquelle a été enroulé un insert selon les principes de l'invention et
la figure 2 représente une coupe du manchon placé autour de la canalisation à l'endroit de la zone défectueuse et montrant les différents brins de l'insert au-dessus de la zone défectueuse.

### Description détaillée de l'invention

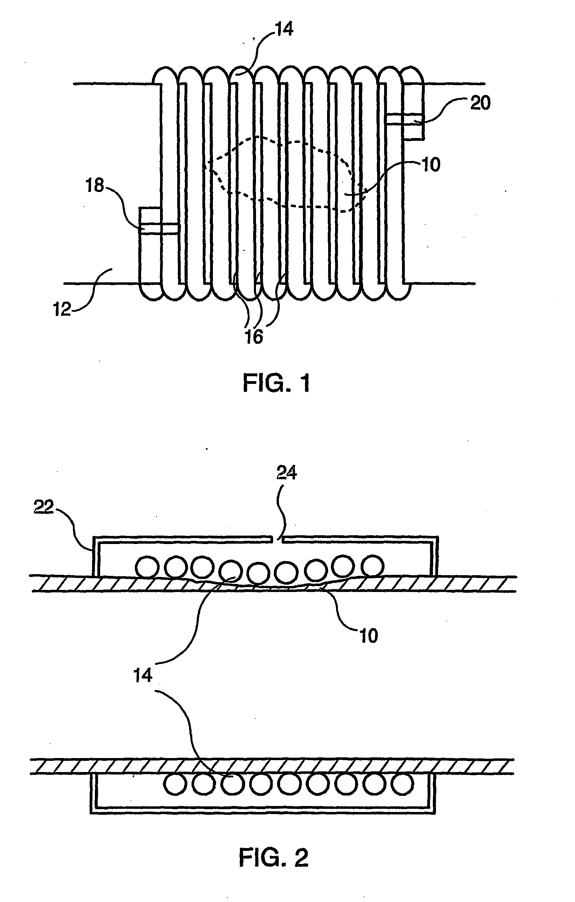

De façon classique, un manchon constitué d'une coque rigide ou souple fermée dans laquelle un matériau polymérisable tel qu'un polyuréthane ou de la résine époxy est injecté ou infusé (injecté par aspiration sous vide), est placé tout autour de la canalisation de façon à recouvrir une zone défectueuse. Une telle zone défectueuse illustrée par la zone en pointillés 10 sur la figure 1 peut être due à la corrosion de la canalisation 12 qui crée un point faible à l'endroit où il y a diminution de l'épaisseur de la paroi de la canalisation et risquant de se percer sous l'effet de la pression du fluide à transporter par la canalisation.

Lorsqu'on procède à la pose d'un manchon selon l'invention, un matériau d'adhérence et d'anticorrosion est d'abord déposé sur la zone défectueuse. Puis, conformément à l'invention, un insert 14 est enroulé et centré autour de la canalisation de façon à recouvrir entièrement la zone défectueuse 10 ainsi que les deux parties de la canalisation non défectueuses adjacentes à la zone défectueuse.

L'insert est enroulé de façon hélicoidale autour de la canalisation selon un pas hélicoïdal laissant un intervalle 16 suffisant entre deux spires adjacentes de l'insert. Ainsi, en utilisant un insert d'une largeur de 10 mm, on peut laisser un intervalle de 1 mm. Cet intervalle est nécessaire pour que la résine injectée ou infusée dans la coque rigide ou souple du manchon puisse enrober les spires de l'insert et adhérer à la surface de la paroi de la canalisation.

Lorsque l'élément filiforme constituant les spires de l'insert a été enroulé autour de la canalisation, chacune des extrémités de l'élément est fixée à la spire par un collier de serrage 18 ou 20.

La coque rigide ou souple 22 du manchon est ensuite disposée autour de la canalisation comme illustré sur la figure 2. Cette coque *rigide ou souple* 22 doit enrober toutes les spires de l'insert placé préalablement autour de la canalisation et avoir une hauteur suffisante pour qu'il existe un interstice suffisant pour y injecter ou infuser le matériau polymérisable. Ainsi, avec un insert d'une épaisseur de 10 mm, la coque aura une hauteur de 20 mm.

Dans le cas de l'infusion, le vide préalablement établi à l'aide d'une pompe à vide permet à la coque souple de plaquer et d'épouser le renfort déjà disposé. L'infusion de la résine peut alors se faire, elle garantira un remplissage total de la zone à réparer par la matière polymérisable.

Lorsque la coque rigide ou souple 22 a été fixée sur la canalisation de façon à être hermétiquement close, la matière polymérisable à l'état liquide est injectée ou infusée à l'aide d'une pompe à vide à l'intérieur de la coque rigide ou souple par un orifice 24. La quantité à injecter ou infuser correspond au remplissage de la coque, la matière polymérisable enrobant entièrement toutes les spires de l'insert et remplissant les intervalles entre spires.

A noter que la zone défectueuse 10, généralement due à la corrosion, présente une épaisseur nettement inférieure à l'épaisseur normale de la paroi de la canalisation, comme le montre la figure 2. La canalisation présente donc un creux à l'endroit de la zone et par conséquent, l'insert n'est toujours pas en contact avec la paroi de la canalisation à cet endroit. Ceci n'a aucune importance dans la mesure où la résine résultant de la polymérisation de la matière polymérisable injectée ou infusée enrobe complètement les spires de l'insert et agit comme transmetteur de forces entre la paroi de la canalisation et l'insert.

L'insert utilisé dans le manchon selon l'invention est un élément filiforme flexible (corde) semi-rigide (tresse métallique) ou préformé (du type ressort en composite) apte à pouvoir s'enrouler autour de la canalisation. Il peut avoir une section de forme quelconque et variable le long de l'insert, mais il est préférable que l'insert ait une section circulaire et constante. Il peut être constitué de tout matériau présentant une bonne tenue à la traction tel que de l'aramide (par exemple Kevlar®) et en particulier il peut être en fibres naturelles (par exemple verre ou carbone), synthétiques ou pré-imprégnées. L'épaisseur de l'insert ou son diamètre s'il s'agit d'un élément de section circulaire est fonction de ses caractéristiques mécaniques. Il peut varier de quelques mm (par exemple 2 mm), à quelques dizaines de mm (par exemple 50 mm).

L'insert a pour but de neutraliser les forces radiales qui s'expriment sur la paroi de la canalisation à l'endroit d'une zone défectueuse en transformant ces forces radiales en des forces de traction réparties sur chacune des spires de l'insert se trouvant sur la zone défectueuse. Les forces radiales s'exerçant sur la paroi de la canalisation sont communiquées à l'insert grâce à la résine qui remplit la coque rigide ou souple et qui est une matière solide après polymérisation de la matière polymérisable injectée ou infusée dans la coque qui joue ici le rôle d'un coffrage. L'association de l'insert et de la résine est équivalente à un matériau composite où l'efficacité de l'ensemble pour contrer les forces radiales s'exerçant sur la paroi de la canalisation est due à la synergie entre les deux composants.

Le manchon selon l'invention peut être utilisé avec des canalisations de tous diamètres allant de 100 mm à plusieurs mètres. Sa largeur peut être adaptée selon la canalisation, par exemple de 300 à plusieurs mètres (limite associée à la technologie des thermoplastiques ou à l'infusion) et sa hauteur est de préférence comprise entre 10 mm et 80 mm.

Il peut être utilisé pour la réparation de canalisations comportant une corrosion atteignant jusqu'à 80% de l'épaisseur de la paroi et quelle que soit la largeur de la zone défectueuse. Ainsi, on a pu effectuer la réparation d'une zone de 200 mm de longueur axiale, 300 mm de largeur circonférentielle et représentant une profondeur de 5,70 mm soit 80% de l'épaisseur de la paroi (7,1 mm) d'une canalisation ayant un diamètre de 324 mm.

Une caractéristique fondamentale du manchon selon l'invention due à sa structure même est son adaptabilité à toute forme de canalisation. Ainsi, il peut être installé même lorsque la canalisation n'est pas circulaire mais plutôt ovale, quel que soit le rayon de courbure de la canalisation (par exemple sur un coude) et même lorsque la canalisation comporte une soudure axiale ou circonférentielle puisqu'il n'est pas nécessaire que l'insert soit en contact avec la paroi de la canalisation.

Le manchon selon l'invention peut être utilisé pour la réparation de toute structure tubulaire abîmée par une perte d'épaisseur due à la corrosion ou une fissuration, de façon à lui conférer ses caractéristiques mécaniques initiales. Il peut être utilisé par les sociétés de maintenance, par les sociétés de maintenance des transports de fluides (hydrocarbures principalement) bien que son usage ne soit pas limité à ce domaine. Ainsi, grâce à ses caractéristiques mécaniques, il peut être utilisé dans le secteur du bâtiment et des travaux publics, en particulier pour le renforcement des colonnes et autres piliers de soutènement.

## Revendications

1. Manchon pour la réparation d'une canalisation de transport de fluide (12) comporte une zone défectueuse (10) dont la paroi présente une épaisseur nettement inférieure à l'épaisseur normale de la paroi de la canalisation et donc une faible résistance à la pression, consistant en
- une coque rigide ou souple (22) servant de moule pour entourer au moins ladite zone défectueuse, ladite coque étant remplie d'une matière polymère ; et
- un insert constitué d'une pluralité de spires d'un élément filiforme (14) enroulé en hélice autour de la canalisation à l'endroit de ladite zone défectueuse, ledit insert étant enrobé dans ladite matière polymère dans le but de transformer les forces radiales s'exprimant sur la paroi de la canalisation à l'endroit de ladite zone défectueuse en forces de traction réparties sur chacune des spires dudit insert.

2. Manchon selon la revendication 1, dans lequel les spires dudit élément filiforme (14) sont séparées par un intervalle prédéterminé (16) de manière à ce que chacune des spires dudit insert soit enrobé par ladite matière polymère.

3. Manchon selon la revendication 2, dans lequel ledit élément filiforme (14) est un élément flexible de section circulaire constante formé de fibres naturelles, synthétiques ou pré-imprégnées.

4. Manchon selon la revendication 3, dans lequel ledit élément filiforme (14) est constitué d'aramide et notamment du Kevlar®.

5. Manchon selon la revendication 4, dans lequel l'insert comprend un collier de serrage (18, 20) fixant chacune des extrémités dudit élément filiforme (14) à la spire adjacente.

6. Procédé de réparation d'une canalisation de transport de fluide (12) comporte une zone défectueuse (10) dont la paroi présente une épaisseur nettement inférieure à l'épaisseur normale de la paroi de la canalisation et donc une faible résistance à la pression consistant à enrouler en hélice un élément filiforme (14) autour de la canalisation à l'endroit de ladite zone défectueuse, entourer la portion de la canalisation où se trouve ladite zone défectueuse par une coque rigide ou souple (22) hermétiquement close, ladite coque étant adaptée pour recouvrir entièrement les spires dudit élément filiforme et injecter ou infuser à l'intérieur de ladite coque une matière liquide polymérisable destinée à former une résine après polymérisation .

## Claims

1. Sleeve for repairing a fluid transport pipe (12) featuring a defective area (10) whose wall thickness is much less than the normal wall thickness of the pipe and which therefore provides only little resistance to pressure, consisting of:
- a rigid or flexible shell (22) used as a mould for encasing at least the said defective area; and
- an insert comprising a plurality of turns of a filiform element (14) wound helically around the pipe at the location of the said defective area, the said insert being embedded in the said polymer material with the aim of converting the radial forces exerted on the pipe wall at the location of the said defective area into tensile forces distributed to each turn of the said insert.

2. Sleeve according to Claim 1, in which the turns of the said filiform element (14) are separated by a predetermined gap (16) such that each of the turns of the said insert is coated by the said polymer material.

3. Sleeve according to Claim 2, in which the said filiform element (14) is a flexible element of constant circular cross section formed by natural, synthetic or pre-impregnated fibres.

4. Sleeve according to Claim 3, in which the said filiform element (14) is made of aramid and in particular Kevlar®.

5. Sleeve according to Claim 4, in which the insert includes a clamping collar (18, 20) for fixing each of the ends of the said filiform element (14) to the adjacent turn.

6. Process for repairing a fluid transport pipe (12) featuring a defective area (10) whose wall thickness is much less than the normal wall thickness of the pipe and which therefore provides only little resistance to pressure, consisting in helically winding a filiform element (14) around the pipe at the location of the said defective area, in encasing the section of pipe featuring the said defective area in a hermetically sealed, rigid or flexible shell (22), the said shell being suitable for completely covering the turns of the said filiform element, and injecting or infusing into the said shell a curable liquid material designed to form a resin after curing.

## Patentansprüche

1. Muffe zur Reparatur einer Rohrleitung zum Transport von Flüssigkeit (12), umfassend eine fehlerhafte Zone (10), deren Wand eine Dicke aufweist, die deutlich unter der normalen Dicke der Wand der Rohrleitung liegt und daher einen schwachen Widerstand gegenüber dem Druck aufweist, bestehend aus
- einer steifen oder biegsamen Schale (22), die als Form dient, um mindestens die fehlerhafte Zone zu umgeben, wobei die Schale mit einem Polymermaterial gefüllt ist; und
- einem Einsatz, der aus mehreren Windungen eines filiformen Elements (14) zusammengesetzt ist, das schraubenförmig um die Rohrleitung an der fehlerhaften Zone gewickelt ist, wobei der Einsatz in dem Polymermaterial eingehüllt ist, um die Radialkräfte, die an der Wand der Rohrleitung an der fehlerhaften Zone vorhanden sind, in Zugkräfte, welche auf jede Windung des Einsatzes verteilt sind, umzuwandeln.

2. Muffe nach Anspruch 1, wobei die Windungen des filiformen Elements (14) derart durch einen vorbestimmten Abstand (16) getrennt sind, dass jede der Windungen des Einsatzes von dem Polymermaterial eingehüllt ist.

3. Muffe nach Anspruch 2, wobei das filiforme Element (14) ein flexibles Element mit konstantem kreisförmigem Querschnitt ist, das aus natürlichen, synthetischen oder vorimprägnierten Fasern gebildet ist.

4. Muffe nach Anspruch 3, wobei das filiforme Element (14) aus Aramid und insbesondere aus Kevlar® zusammengesetzt ist.

5. Muffe nach Anspruch 4, wobei der Einsatz eine Klemme (18, 20) umfasst, die jedes der Enden des filiformen Elements (14) an der angrenzenden Windung befestigt.

6. Verfahren zur Reparatur einer Rohrleitung zum Transport von Flüssigkeit (12), umfassend eine fehlerhafte Zone (10), deren Wand eine Dicke aufweist, die deutlich unter der normalen Dicke der Wand der Rohrleitung liegt und daher einen schwachen Widerstand gegenüber dem Druck aufweist, bestehend aus dem schraubenförmigen Wickeln eines filiformen Elements (14) um die Rohrleitung an der fehlerhaften Zone, Umgeben des Abschnitts der Rohrleitung, an dem sich die fehlerhafte Zone befindet, mit einer steifen oder biegsamen Schale (22), die hermetisch abgeschlossen ist, wobei die Schale angepasst ist, um die Windungen des filiformen Elements vollständig abzudecken, und Einspritzen oder Eingießen eines flüssigen polymerisierbaren Materials, das nach der Polymerisierung ein Harz bilden soll, ins Innere der Schale.
